# EUROPEAN PATENT SPECIFICATION

(11) **EP 1 562 865 B1**
(45) Date of publication and mention of the grant of the patent: **11.10.2006**
(21) Application number: 03774426.5
(22) Date of filing: 20.11.2003
(51) Int. Cl.: C02F 1/32

(54) **SYSTEM FOR SUPPLY OF LIQUID**
SYSTEM ZUR ZUFUHR VON FLÜSSIGKEIT
SYSTEME D'ALIMENTATION EN LIQUIDE

(30) Priority: 22.11.2002 SE 0203469
(43) Date of publication of application: 17.08.2005
(73) Proprietor: Dometic AB, 562 28 Norrhammar (SE)
(72) Inventor: HEGMEGI, Zsolt, S-571 32 Nässjö (SE)
(74) Representative: Wennborg, Johan
(86) International application number: PCT/SE2003/001803
(87) International publication number: WO 2004/048275

(56) References cited:
- WO-A1-00/71227
- US-A- 4 535 247

## Description

### Field of the Invention

The present invention relates to a system for supplying liquid, comprising a tapping point for drawing off liquid from the system, a liquid pipe which connects the tapping point with a flow regulator, which in an active mode passes liquid from a liquid source through the pipe to the tapping point and in an inactive mode prevents the flow of liquid through the liquid pipe, a liquid purifier, which is connected to the liquid pipe between the tapping point and the flow regulator and which comprises an electrical UV light source and means for automatically lighting up the UV light source when the flow regulator is activated for passing liquid through the liquid pipe and the tapping point.

The system is particularly suitable for use with mobile applications, such as in campers and caravans.

### Background art

In, for example, campers, there is a need to carry and store water for domestic requirements. The water is normally stored in a storage tank, which contains the normal requirements for anything from a couple of days up to several weeks. However, it is common for at least some of the quantity of water to remain in the tank for a considerably longer period of time, for example if the tank is not emptied completely and cleaned before each refill. Such long-term storage can give rise to the growth of micro-organisms which can be harmful to the user, particularly if the water is used as drinking water. Tests have shown that water which is stored for a week in the storage tank of a camper exceeds the guidelines of the Swedish National Food Administration relating to the presence of micro-organisms in drinking water by a factor of 28. Therefore the water supply system can be equipped with a water purifier, which is connected in series between the storage tank and the tapping points. In such a case, the water supply system can comprise a storage tank, a flow regulator in the form of a pump, a water purifier, a water heater and one or more tapping points in the form, for example, of faucets. One type of water purifier comprises a filter with active carbon which is connected via a reducing valve to a UV-light purifier, which comprises a purification chamber with a UV light source and a water pipe, for example a quartz glass tube, which allows UV light to pass through.

When a user wants to draw off water, according to the current technology he or she must first light up the UV light source and ensure that it is shining with sufficient intensity. Thereafter the user can start the pump. This is carried out either by the user opening the faucet at a tapping point, whereupon a pressure sensor in the system or an automatic switch in the faucet starts the pump, or, alternatively, the pump can be started manually by a switch at the tapping point. When the pump starts, water is pumped from the tank to the water purifier, where it first passes through the filter with active carbon to filter off solid impurities, chlorine, smell and taste. From the filter, the water is taken via the reducing valve to the purification chamber. In the purification chamber, the water is passed through a quartz glass tube which is arranged parallel to a UV fluorescent tube. A reflector is normally arranged parallel to the longitudinal axis of the quartz glass tube and the UV fluorescent tube, surrounding these elements, so that the UV light is focused towards the central longitudinal axis of the quartz glass tube, as described, for example, in WO 96/33135. When the water passes through the quartz glass tube, it is illuminated by the UV light, whereby the micro-organisms that have passed through the filter are exposed to UV radiation. This affects certain molecular structures in the micro-organisms, whereupon these die or at least are made harmless for a period of time. When the water has passed through the quartz glass tube, it is taken out of the purification chamber and, if required via a heater, to the tapping point.

A problem with the use of the known water supply systems described above is that the user must start the UV light source in the liquid purifier and the pump separately. This involves an extra operation which is perceived by the user as inconvenient and annoying. In addition, according to the known technology, it has been necessary to first light up the UV light source and then wait for the UV light source to warm up so that it emits full intensity before the pump is started, in order to ensure that sufficiently many micro-organisms are destroyed, so that the water quality is sufficiently good straight away when the pump is switched on and the water is drawn off from the system. This waiting period can amount to several minutes and is perceived by the user as inconvenient. In the Swedish patent application no. 0203471-0 entitled "Method for liquid purification and liquid purifier" with the same applicant and date of submission as the present application, an invention is described which eliminates the waiting time between the lighting up of the UV light source and the starting of the pump. With the solution proposed therein, the problem is increased that it is perceived as inconvenient by the user to need to switch on the pump and the UV light source separately.

WO 00/71227 describes a water treatment unit with a UV light source. The unit is user-activated, with the UV light source being lit up automatically when the user opens a faucet in order to draw off water from the unit. In the unit described, the automatic lighting up is carried out by a flow sensor detecting the flow through the system when the faucet is opened and sending a signal that lights up the UV light source via an electronic load. Such a solution carries the risk of breakdown and of the UV light source not being lit up, for example if the flow sensor, which comprises sensitive mechanical components, breaks down or seizes up. In addition, the UV light source will not be lit up if the flow is lower than what the flow sensor can detect, for example due to a blockage in the pipes.

### Disclosure of invention

An object of the present invention is therefore to make easier the operation of liquid supply systems of the type described in the introduction by providing a system in which the user only needs to carry out a single action when he or she wants to draw off liquid from the system.

Another object is to provide such a liquid supply system that ensures with greater reliability that the UV light source is actually lit up when the flow regulator is activated in order to draw off liquid through the system.

An additional object is to provide such a system that is simple, cheap to manufacture and reliable and in which the number of mechanical components is minimized.

These objects are achieved by a system for supplying liquid according to the first paragraph of this description, which is characterized in that the flow regulator is controlled electrically and is connected to a voltage source via an electrical supply lead and in that means for automatically lighting up the UV light source are arranged to detect a supply current that passes through the supply lead when the flow regulator is activated and to light up the UV light source when the supply current passes through the supply lead.

The controlling of the UV light source is thus carried out by completely electrical means. An integrated electrical direct connection is hereby achieved between the flow regulator and the UV light source. In this way, it is ensured that the UV light source is actually lit up as soon as the flow regulator is activated. At the same time the invention provides a simple, relatively cheap and reliable system, with a minimum of mechanical components.

The flow regulator can, for example, consist of an electrical liquid pump which pumps liquid from a storage tank or a well to the liquid pipe. In this case, activating the flow regulator means quite simply starting the pump, which can be carried out in a number of different ways. According to one embodiment, a pressure sensor is arranged in the pump, on its pressure side, or in the liquid pipe between the pump and the tapping point. The pressure sensor is also electrically connected to a switch on the electrical supply lead of the pump. When the user opens the faucet at a tapping point, the pressure sensor detects a drop in pressure in the liquid system and sends a signal to the pump switch which starts the pump by connecting the pump to the voltage source. The means for automatically lighting up the UV light source then detects the current that passes through the pump's electrical supply lead and connects the UV light source to the voltage source so that the UV light source is automatically lit up. Alternatively, a manual pump switch can be arranged, for example in the vicinity of the tapping point, whereby the user manually switches on the pump when water is to be drawn off from the system. The pump switch can also be mechanically connected to the faucet so the pump is connected to the voltage source when the faucet is turned.

If the liquid supply system according to the invention is used in a stationary application, for example in a household, which is connected to a pressurized water supply network, the flow regulator can instead consist of an electrically-controlled valve. The valve is normally closed and is activated, that is opened, by connecting the valve to the voltage source. This can be carried out in a corresponding way as for the pump, for example using a pressure sensor, a manual valve switch or a valve switch that is mechanically connected to the faucet. The means for automatically lighting up the UV light source detects, in a corresponding way as for the pump, the current that passes through the valve's electrical supply lead when the valve is open and connects the UV light source to the voltage source so that the UV light source is lit up automatically.

According to one embodiment, the flow regulator and the UV light source are connected to one and the same voltage source when they are switched on. By this means, a simple and cost-effective system is achieved.

According to a preferred embodiment, the means for automatically lighting up the UV light source comprises a so-called high side driver (in the following called HSD) which is connected to the plus pole of the flow regulator and to a microprocessor, which controls the UV light source. The HSD consists of a number of integrated electronic components and can be described functionally as a combined current detector and switch. In this way, the HSD can be used both to detect when the pump is in operation and to switch off the pump and thereby the UV light source if the microprocessor detects any malfunction in the operation of the system.

### Description of Drawings

Two exemplified embodiments of the liquid supply system according to the invention are described below with reference to the attached figures.
Figure 1 shows schematically a first embodiment of a water supply system which can be used, for example, in campers.
Figure 2 is a block diagram showing the function of the means for automatically lighting up the UV light source in the embodiment of the invention shown in Figure 1.
Figure 3 shows schematically a second embodiment of a water supply system, that can be used, for example, in a household with access to a pressurized water supply network.
Figure 4 is a block diagram showing the function of the means for automatically lighting up the UV light source in the embodiment of the invention shown in Figure 3.

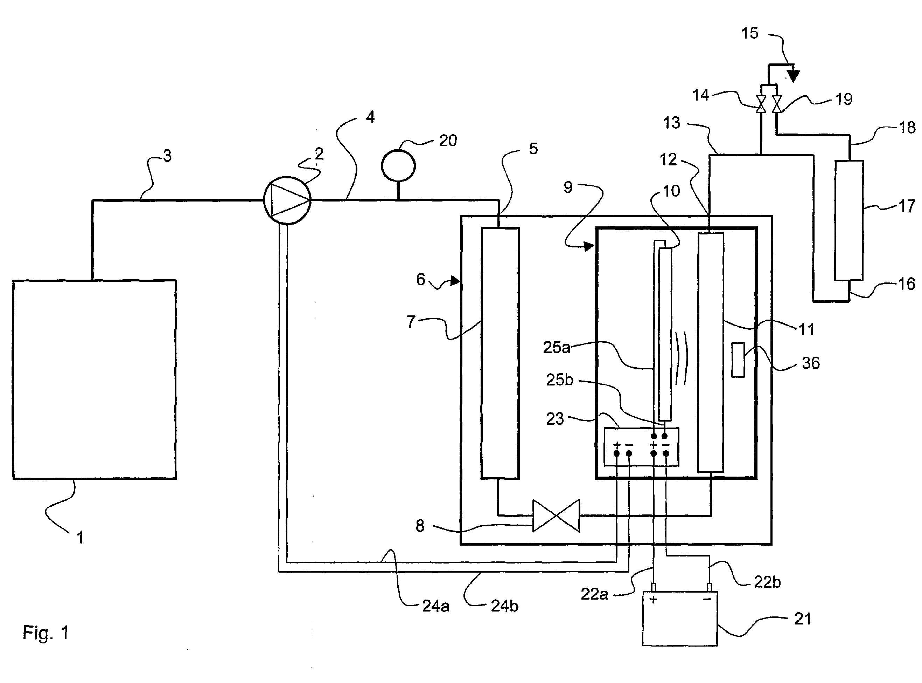

Figure 1 shows schematically a water supply system, for example for caravans, campers, boats, planes or any similar application, where the water for domestic purposes is carried in a storage tank 1. The water supply system comprises a pump 2, the suction side of which is connected to the storage tank 1 by a pipe 3. The pressure side of the pump 2 is connected via a pipe 4 to an inlet 5 of a water purifier 6. The water purifier 6 comprises a filter 7 which contains active carbon, a reducing valve 8 and a UV-light purifier 9 with a UV fluorescent tube 10 and a quartz glass tube 11, through which water is passed while it is illuminated by the UV light. An outlet 12 of the water purifier is connected to a cold water faucet 14 at a tapping point 15 via a pipe 13. The outlet 12 is also connected to a water heater 17 powered by electricity or bottled gas, which is connected to the hot water faucet 19 at the tapping point via a pipe 18.

A pressure sensor 20 is connected to the liquid pipe 4 and arranged to detect the pressure in the water pipe between the pressure side of the pump 2 and the tapping point 15. The pressure sensor 20 can alternatively be connected to any other section of liquid pipe on the pressure side of the pump or to the pump 2 on its pressure side.

Furher, a voltage source 21 in the form of a 12V DC battery is arranged to supply power to the pump 2 and the UV fluorescent tube 10 in the UV-light purifier 9. Electrical supply leads 22a, 22b connect the plus and minus poles respectively of the voltage source 21 to a circuit board 23 which is arranged in the UV-light purifier 9 for controlling the function of the system. In addition, electrical supply leads 24a, 24b are taken from the circuit board 23 to the supply connections of the pump 2. The UV fluorescent tube 10 is also electrically connected to the circuit board 23 by means of two supply leads 25a, 25b.

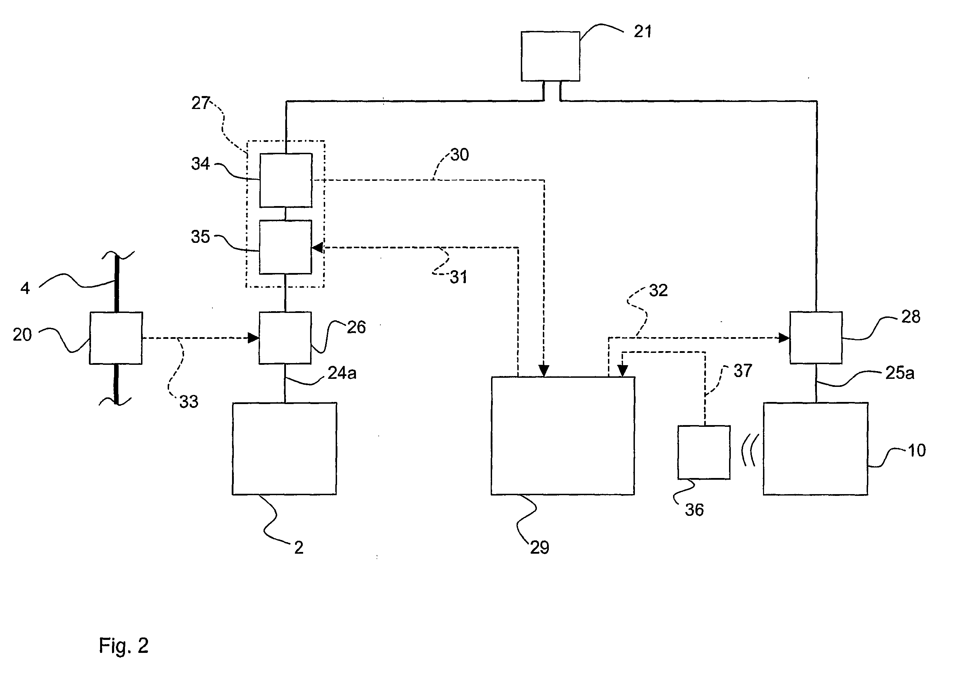

Figure 2 shows the function of the means for automatically lighting up the UV fluorescent tube when the pump is started. The pump 2 is connected by its positive supply lead 24a to the voltage source 21 via a pump switch 26 and an HSD 27. In addition, the UV fluorescent tube 10 is connected by its positive supply lead 25a to the voltage source 21 via a switch 28. A microprocessor 29 communicates with the HSD 27 and the switch 28. This communication is symbolized in the figure by the broken arrows 30 and 31, 32 respectively. The pressure sensor 20 is arranged in the liquid pipe 4 (see also Figure 1) and is electrically connected to the pump switch 26 for communication 33 with this. The HSD comprises functionally a current detector 34 and an emergency cut-out 35.

When a user wants to draw off water from the liquid supply system, he or she opens one or both faucets 14, 19 at the tapping point 95. The liquid pressure in the system then drops, which is recorded by the pressure sensor 20, whereupon the pressure sensor 20 sends a signal 33 to the pump switch 26. The pump switch 26 then closes, whereupon the pump 2 starts and a current starts to pass through the pump's positive supply lead 24a. This supply current is detected by the HSD's 27 current detector 34, which then sends a signal 30 to the microprocessor 29. This signal 30 causes the microprocessor 29 to send a signal 32 to the UV fluorescent tube's 10 switch 28, whereupon the switch closes, whereupon the UV fluorescent tube 10 is connected to the voltage source 21 and is lit up.

When the user shuts off the faucets 14, 19 at the tapping point 15 again, the pressure in the liquid system increases, whereupon the pressure sensor 20 ceases to send the signal 33 to the pump switch 26 which then breaks. The current ceases to pass through the supply lead 24a of the pump 2, whereupon the current detector 34 detects this and ceases to send the signal 30 to the microprocessor 29, which in turn ceases to send the signal 32 to the UV fluorescent tube's switch 28, which breaks so that the UV fluorescent tube 10 is switched off. With the aim of prolonging the life of the UV fluorescent tube 10, the microprocessor can be programmed to switch off the UV fluorescent tube a certain time, for example 30-60 seconds, after the pump is switched off. If the user again draws off water from the system within this period of time, the UV fluorescent tube does not need to be switched off and lit up again, which prolongs its life, as each lighting up of the fluorescent tube shortens its life.

Again referring to Figures 1 and 2, the HSD 27 can also comprise an emergency cut-out function 35, which is used to switch off the pump 2 and thereby the UV fluorescent tube 10 if an abnormal operating situation arises. Such an abnormal operating situation can, for example, be that the light intensity from the UV fluorescent tube 10 is too low, so that an adequate destruction of micro-organisms can not be ensured. Such a low light intensity can in turn be due to the UV fluorescent tube 10 being worn out or can be due to deposits on the quartz glass tube 11. For this reason, a light-intensity sensor 36 can be arranged in the UV-light purifier 9 on the opposite side of the quartz glass tube 11 to the UV fluorescent tube 10. If the light-intensity sensor 36 detects that the UV light intensity is less than a certain predetermined level, the sensor 36 sends a signal 37 to the microprocessor 29, which then sends an order signal 31 to the HSD's 27 emergency cut-out function 35. The emergency cut-out 35 then breaks, whereupon the supply current of the pump 2 ceases to pass through the supply lead 24a, so that the pump 2 and hence the UV fluorescent tube 10 are switched off, as described above. A light-emitting diode can be connected to the microprocessor in order to give the user an indication that the system needs attention when the emergency cut-out function 35 operates.

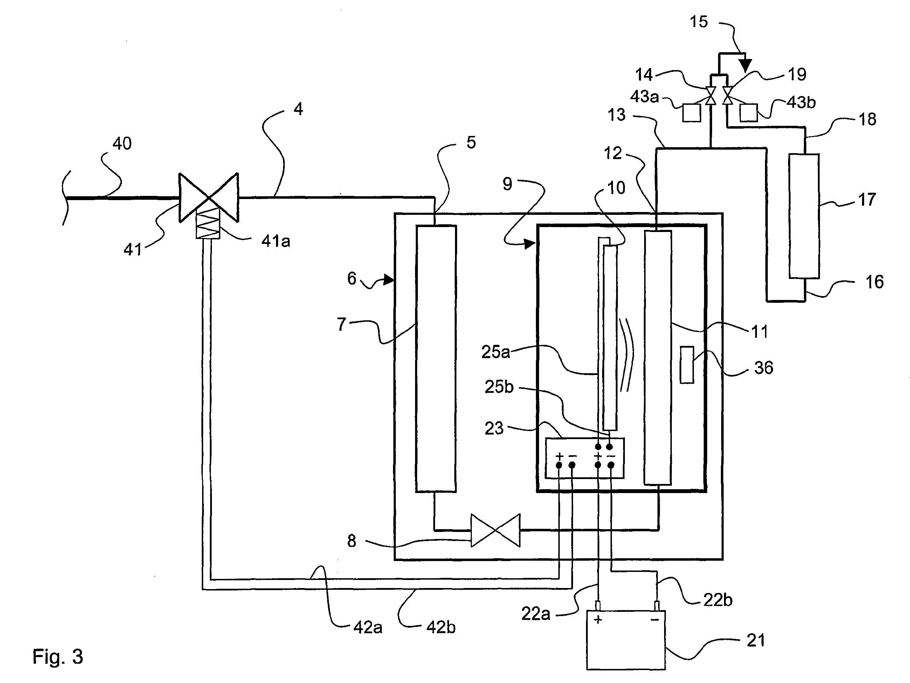

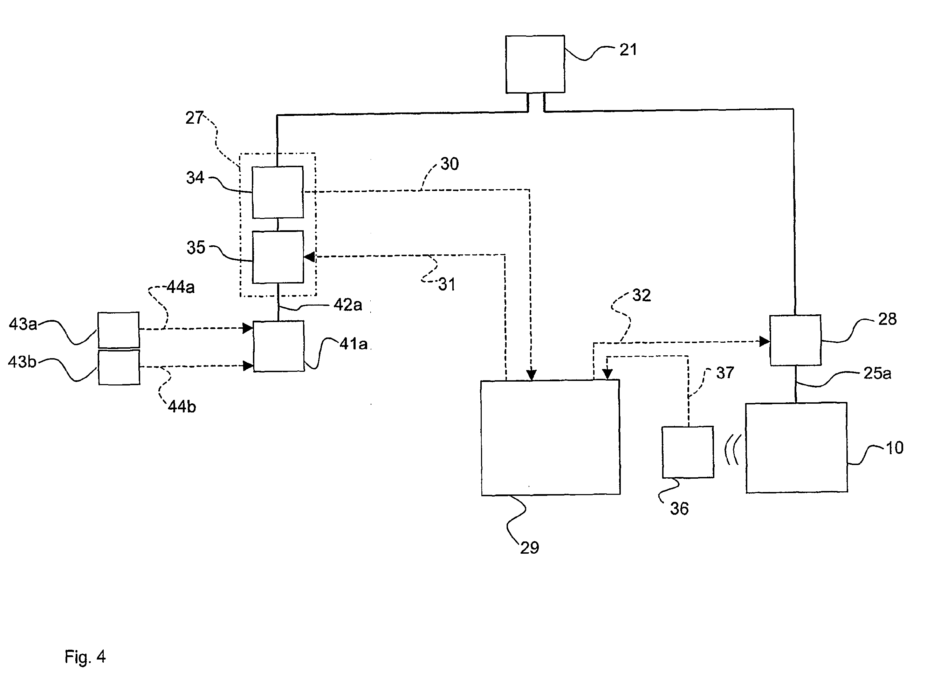

Figures 3 and 4 show an alternative embodiment of the liquid supply system according to the invention, which can be used for stationary applications where there is access to a pressurized water supply network 40. The components and elements that are common to the embodiment described above have the same reference numbers in Figures 3 and 4 as in Figures 1 and 2. The description below deals principally with what distinguishes this embodiment from the embodiment described above.

The liquid supply system according to this alternative embodiment is connected to the water supply network 40 by means of a flow regulator in the form of an electrically-controlled valve 41. The valve 41 is normally closed and is opened by means of a supply voltage being connected from the voltage source 21 via the circuit board 23 and the valve's electrical supply leads 42a, 42b to an electrical control device 41 a on the valve 41. Two microswitches 43a, 43b are mechanically connected to the cold 14 and hot water faucets 19 respectively at the tapping point. The microswitches 43a, 43b are electrically connected to the valve's electrical control device 41 a for communication 44a and 44b respectively with this.

When a user wants to draw off water from the liquid supply system, he or she opens one or both faucets 14, 19 at the tapping point 15, whereupon one or both of the microswitches 43a, 43b closes and sends a signal 44a, 44b respectively to the valve's control device 41 a. The control device 41 a is then activated, whereupon the valve 41 opens so that water flows through the liquid pipe 4 to the liquid purifier 6 and the tapping point 15, while at the same time a current starts to pass through the positive supply lead 42a of the control device 41 a. In the same way as for the embodiment described above, the supply current is detected by the HSD's 27 current detector 34, which thereupon sends a signal 30 to the microprocessor 29. The signal 30 causes the microprocessor 29 to send a signal 32 to the UV fluorescent tube's 10 switch 28 which closes, whereupon the UV fluorescent tube 10 is connected to the voltage source 21 and is lit up.

When the user closes the faucets 14, 19, the microswitches 43a, 43b are broken and thereby cease to send the signals 44a, 44b respectively to the valve's 41 control device 41 a which then closes the valve 41. As with the embodiment described above, the supply current to the control device 41 a then ceases, which is detected by the HSD 27, which communicates with the UV fluorescent tube's 10 switch 28 via the microprocessor 29, so that the UV fluorescent tube is switched off.

Two embodiments of the invention have been described above. Other embodiments are also possible within the scope of the following patent claims. For example, the HSD can be replaced by a low side driver, which is connected to the negative supply lead of the pump or of the valve's control device. In addition, the means for automatically lighting up the UV light source when the pump starts can comprise a diode which is connected between the pump's negative or positive supply lead and earth. When the pump switch is closed and a supply current starts to pass through the pump's supply leads, a voltage drop then arises across the diode. This voltage drop is detected by the microprocessor, which then sends a signal to the UV switch whereupon the UV light source is lit up, as described above.

In addition, instead of being controlled by the pressure sensor 20 or the microswitches 43a, 43b, the flow regulator 2, 41 can consist of a manual switch which is suitably located in the vicinity of the tapping point. The choice of means for controlling the flow regulator is not dependent upon the type of flow regulator. Thus, a pump switch can be controlled by, or can consist of, a manual switch or one or microswitches that are mechanically connected to the faucets, and similarly an electrically-controlled valve can be controlled by a pressure sensor or by a manual switch.

The system can also be used for other applications, such as stationary households, where the storage tank or water supply network can be replaced by, for example, a well.

It will be recognized by experts in the field that the communication described above between the different components can be achieved in a number of different ways. For example, the signals can be achieved by the respective signal-transmitting component generating a high or a low voltage at its communication output, with the different voltage levels representing different instructions to the signal-receiving component.

It will also be recognized that, for example, the water heater 17 and the water heater circuit 16, 18, 19 can be omitted.

The voltage source consists suitably of a 9 V - 35 V, preferably a 12 V or 24 V DC voltage source but also other voltage sources such as a transformer or battery charger that is supplied with 100 - 240 V AC voltage, and which supplies 9 - 35 V DC voltage, can be used.

The emergency cut-out function 35 can also be triggered as a result of order signals from the microprocessor, which are caused by other malfunctions than low UV light intensity. Examples of such malfunctions are too high a flow through the quartz glass tube, whereby adequate destruction of micro-organisms cannot be ensured, or too low a flow through the quartz glass tube which indicates that the filter is blocked.

## Claims

1. A system for supplying liquid comprising a tapping point (15) for drawing off liquid from the system, a liquid pipe (4, 5, 12, 13, 16, 18) that connects the tapping point with a flow regulator (2, 41), which in an active mode passes liquid from a liquid source (1, 40) through the pipe to the tapping point and in an inactive mode prevents the flow of liquid through the liquid pipe, a liquid purifier (6), which is connected to the liquid pipe between the tapping point and the flow regulator and which comprises an electrical UV light source (10) and means for automatically lighting up the UV light source (10) when the flow regulator (2, 40) is activated for passing liquid through the liquid pipe and the tapping point, **characterized in that** the flow regulator (2, 41) is controlled electrically and is connected to a voltage source (21) via an electrical supply lead (24a, 24b, 42a, 42b) and **in that** the means for automatically lighting up the UV light source (10) is arranged to detect a supply current that passes through the supply lead when the flow regulator is activated and to light up the UV light source when the supply current passes through the supply lead.

2. The system as claimed in claim 1, wherein the means for automatically lighting up the UV light source (10) comprises an electronic control circuit (27) which is connected to one of the flow regulator's (2, 40) electrical supply leads (24a, 24b, 42a, 42b) and to a microprocessor (29) and wherein the electronic control circuit is arranged to send an operating signal (30) when the flow regulator (2, 40) is activated, whereupon a supply current passes through the supply lead of the flow regulator and the microprocessor is arranged to detect the operating signal and light up the UV light source by connecting the UV light source to the voltage source (21) when the control circuit sends the operating signal.

3. The system as claimed in claim 2, wherein the electronic control circuit (27) comprises means (35) for breaking the supply current to the flow regulator (2, 40) as a result of an order signal (31) from the microprocessor (29).

4. The system as claimed in claim 3 or 4, wherein the electronic control circuit comprises a so-called high side driver (27).

5. The system as claimed in claim 1, wherein a diode is connected between one of the flow regulator's supply leads and earth and in that a microprocessor is arranged to detect a drop in voltage across the diode when the flow regulator is activated and to connect the UV light source to the voltage source when the microprocessor detects the drop in voltage across the diode.

6. The system according to any one of Claims 1 - 5, wherein the flow regulator consists of an electrical liquid pump (2), which is controlled by a pump switch (26) which is arranged on one of the pump's electrical supply leads (24a, 24b).

7. The system according to any one of Claims 1 - 5, wherein the flow regulator consists of an electrically-controlled valve (41), which comprises an electrical control device (41a), with the value normally being closed and being opened when the control device is activated by passing a supply current through the control device's electrical supply leads (42a, 42b).

8. The system according to any one of Claims 6 or 7, wherein a pressure sensor (28) is arranged in the liquid pipe (4, 5, 11, 12, 13, 16, 18) or the flow regulator (2, 40) and is connected to the pump switch (26) or the valve's (41) electrical control device (41 a), so that the flow regulator is activated when the pressure in the liquid pipe is less than a predetermined level.

9. The system according to any one of Claims 1 - 8, wherein the flow regulator (2, 40) and the UV light source are connected to one and the same voltage source (21).

10. The system according to any one of Claims 1 - 9, wherein the voltage source (17) is a 12 V DC voltage source.

## Patentansprüche

1. System zum Liefern einer Flüssigkeit, aufweisend einen Entnahmepunkt (15) zum Entnehmen einer Flüssigkeit aus dem System, eine Flüssigkeitsleitung (4, 5, 12, 13, 16, 18), welche den Entnahmepunkt mit einem Strömungsregler (2, 41) verbindet, welcher in einem aktiven Modus die Flüssigkeit von einer Flüssigkeitsquelle (1, 40) durch die Leitung zu dem Entnahmepunkt passieren lässt und in einem inaktiven Modus die Strömung der Flüssigkeit durch die Flüssigkeitsleitung verhindert, einen Flüssigkeitsreiniger (6), welcher mit der Flüssigkeitsleitung zwischen dem Entnahmepunkt und dem Strömungsregler verbunden ist und welcher eine elektrische UV-Lichtquelle (10) und eine Einrichtung zum automatischen Einschalten der UV-Lichtquelle (10) aufweist, wenn der Strömungsregler (2, 40) aktiviert ist zum Passierenlassen der Flüssigkeit durch die Flüssigkeitsleitung und den Entnahmepunkt, **dadurch gekennzeichnet, dass** der Strömungsregler (2, 41) elektrisch gesteuert ist und mit einer Spannungsquelle (21) über eine elektrische Versorgungsleitung (24a, 24b, 42a, 42b) verbunden ist, und dass die Einrichtung zum automatischen Einschalten der UV-Lichtquelle (10) angeordnet ist, um einen Versorgungsstrom zu erfassen, der durch die Versorgungsleitung fließt, wenn der Strömungsregler aktiviert ist, und um die UV-Lichtquelle einzuschalten, wenn der Versorgungsstrom durch die Versorgungsleitung strömt.

2. System nach Anspruch 1, bei welchem die Einrichtung zum automatischen Einschalten der UV-Lichtquelle (10) eine elektronische Steuerschaltung (27) aufweist, welche mit einer der elektrischen Versorgungsleitungen (24a, 24b, 42a, 42b) des Strömungsreglers (2, 40) und einem Mikroprozessor (29) verbunden ist, und bei welchem die elektronische Steuerschaltung angeordnet ist, um ein Betriebssignal (30) zu senden, wenn der Strömungsregler (2, 40) aktiviert ist, woraufhin ein Versorgungsstrom durch die Versorgungsleitung des Strömungsreglers fließt, und der Mikroprozessor angeordnet ist, um das Betriebssignal zu erfassen und die UV-Lichtquelle einzuschalten durch Verbinden der UV-Lichtquelle mit der Spannungsquelle (21), wenn die Steuerschaltung das Betriebssignal sendet.

3. System nach Anspruch 2, bei welchem die elektronische Steuerschaltung (27) einen Einrichtung (35) zum Unterbrechen des Versorgungsstroms zu dem Strömungsregler (2, 40) als Ergebnis eines Befehlssignals (31) von dem Mikroprozessor (29) aufweist.

4. System nach Anspruch 3 oder 4, bei welchem die elektronische Steuerschaltung einen so genannten Hochseiten-Treiber (27) aufweist.

5. System nach Anspruch 1, bei welchem eine Diode zwischen einer der Versorgungsleitungen des Strömungsreglers und Masse verbunden ist und bei welchem ein Mikroprozessor angeordnet ist, um einen Spannungsabfall über der Diode zu erfassen, wenn der Strömungsregler aktiviert ist, und um die UV-Lichtquelle mit der Spannungsquelle zu verbinden, wenn der Mikroprozessor den Spannungsabfall über der Diode erfasst.

6. System nach irgendeinem der Ansprüche 1 bis 5, bei welchem der Strömungsregler aus einer elektrischen Flüssigkeitspumpe (2) besteht, welche durch einen Pumpenschalter (26) gesteuert ist, welcher auf einer der elektrischen Versorgungsleitungen (24a, 24b) der Pumpe angeordnet ist.

7. System nach irgendeinem der Ansprüche 1 bis 5, bei welchem der Strömungsregler aus einem elektrisch gesteuerten Ventil (41) besteht, welches eine elektrische Steuervorrichtung (41a) aufweist, wobei das Ventil normalerweise geschlossen ist und geöffnet ist, wenn die Steuervorrichtung aktiviert ist durch Passierenlassen eines Versorgungsstromes durch die elektrischen Versorgungsleitungen (42a, 42b) der Steuervorrichtung.

8. System nach irgendeinem der Ansprüche 6 oder 7, bei welchem ein Drucksensor (28) in der Flüssigkeitsleitung (4, 5, 11, 12, 13, 16, 18) oder in dem Strömungsregler (2, 40) angeordnet ist und mit dem Pumpenschalter (26) oder der elektrischen Steuervorrichtung (41a) des Ventils (41) verbunden ist, so dass der Strömungsregler aktiviert ist, wenn der Druck in der Flüssigkeitsleitung kleiner als ein vorbestimmtes Niveau ist.

9. System nach irgendeinem der Ansprüche 1 bis 8, bei welchem der Strömungsregler (2, 40) und die UV-Lichtquelle mit ein und derselben Spannungsquelle (21) verbunden sind.

10. System nach irgendeinem der Ansprüche 1 bis 9, bei welchem die Spannungsquelle (17) eine 12 V Gleichstromspannungsquelle ist.

## Revendications

1. Système pour acheminer un liquide comprenant un point de soutirage (15) pour soutirer du liquide du système, un tuyau de liquide (4, 5, 12, 13, 16, 18) qui raccorde le point de soutirage à un régulateur d'écoulement (2, 41) qui, en mode actif, laisse passer du liquide d'une source de liquide (1, 40) à travers le tuyau au point de soutirage et, en mode inactif, empêche l'écoulement de liquide à travers le tuyau de liquide, un purificateur de liquide (6) qui est raccordé au tuyau de liquide entre le point de soutirage et le régulateur d'écoulement et qui comprend une source électrique de lumière UV (10) et un moyen pour allumer automatiquement la source de lumière UV (10) lorsque le régulateur d'écoulement (2, 40) est activé pour laisser passer du liquide à travers le tuyau de liquide et le point de soutirage, **caractérisé en ce que** le régulateur d'écoulement (2, 41) est commandé électriquement et est connecté à une source de tension (21) via un conducteur d'alimentation électrique (24a, 24b, 42a, 42b), et **en ce que** le moyen pour allumer automatiquement la source de lumière UV (10) est aménagé pour détecter un courant d'alimentation qui passe à travers le conducteur d'alimentation lorsque le régulateur d'écoulement est activé et pour allumer la source de lumière UV lorsque le courant d'alimentation passe à travers le conducteur d'alimentation.

2. Système selon la revendication 1, dans lequel le moyen pour allumer automatiquement la source de lumière UV (10) comprend un circuit de commande électronique (27) qui est connecté à un des conducteurs d'alimentation électrique (24a, 24b, 42a, 42b) du régulateur d'écoulement (2, 40) et à un microprocesseur (29) et dans lequel le circuit de commande électronique est aménagé pour envoyer un signal de fonctionnement (30) lorsque le régulateur d'écoulement (2, 40) est activé, après quoi un courant d'alimentation passe par le conducteur d'alimentation du régulateur d'écoulement et le microprocesseur est aménagé pour détecter le signal de fonctionnement et allumer la source de lumière UV en connectant la source de lumière UV à la source de tension (21) lorsque le circuit de commande envoie le signal de fonctionnement.

3. Système selon la revendication 2, dans lequel le circuit de commande électronique (27) comprend un moyen (35) pour couper le courant d'alimentation vers le régulateur d'écoulement (2, 40) à la suite d'un signal d'ordre (31) du microprocesseur (29).

4. Système selon la revendication 3 ou 4, dans lequel le circuit de commande électronique comprend ce que l'on appelle une unité de pilotage (27).

5. Système selon la revendication 1, dans lequel une diode est connectée entre l'un des conducteurs d'alimentation du régulateur d'écoulement et la terre, et en ce qu'un microprocesseur est aménagé pour détecter une chute de tension aux bornes de la diode lorsque le régulateur d'écoulement est activé et pour connecter la source de lumière UV à la source de tension lorsque le microprocesseur détecte la chute de tension aux bornes de la diode.

6. Système selon l'une quelconque des revendications 1 à 5, dans lequel le régulateur d'écoulement est constitué d'une pompe à liquide électrique (2) qui est commandée par un commutateur de pompe (26) qui est aménagé sur l'un des conducteurs d'alimentation électrique (24a, 24b) de la pompe.

7. Système selon l'une quelconque des revendications 1 à 5, dans lequel le régulateur d'écoulement est constitué d'une soupape à commande électrique (41) qui comprend un dispositif de commande électrique (41a), la soupape étant normalement fermée et étant ouverte lorsque le dispositif de commande est activé en laissant passer un courant d'alimentation à travers les conducteurs d'alimentation électrique (42a, 42b) du dispositif de commande.

8. Système selon l'une quelconque des revendications 6 ou 7, dans lequel un capteur de pression (28) est aménagé dans le tuyau de liquide (4, 5, 11, 12, 13, 16, 18) ou le régulateur d'écoulement (2, 40) et est connecté au commutateur de pompe (26) ou au dispositif de commande électrique (41a) de la soupape (41), de sorte que le régulateur d'écoulement soit activé lorsque la pression dans le tuyau de liquide est inférieure à un niveau prédéterminé.

9. Système selon l'une quelconque des revendications 1 à 8, dans lequel le régulateur d'écoulement (2, 40) et la source de lumière UV sont connectés à une seule et même source de tension (21).

10. Système selon l'une quelconque des revendications 1 à 9, dans lequel la source de tension (17) est une source de tension CC de 12 V.
